Europäisches Patentamt

European Patent Office

Office européen des brevets

(19)

(11) Veröffentlichungsnummer: **0 274 052 B1**

# EUROPÄISCHE PATENTSCHRIFT

(12)

(45) Veröffentlichungstag der Patentschrift: **17.07.91**

(21) Anmeldenummer: **87117643.4**

(22) Anmeldetag: **28.11.87**

(51) Int. Cl.⁵: **G01M 13/02**, G01N 3/36,
F16F 15/02, F16H 35/06,
B06B 1/18

(54) **Vorrichtung zur Erzeugung definierter Drehschwingungen in einem mechanischen Getriebe.**

(30) Priorität: **03.12.86 DE 3641338**

(43) Veröffentlichungstag der Anmeldung:
**13.07.88 Patentblatt 88/28**

(45) Bekanntmachung des Hinweises auf die
Patenterteilung:
**17.07.91 Patentblatt 91/29**

(84) Benannte Vertragsstaaten:
**AT DE FR GB IT SE**

(56) Entgegenhaltungen:
**DE-B- 1 222 757**
**FR-A- 2 558 552**
**US-A- 3 112 643**
**US-A- 3 460 405**
**US-A- 4 283 957**

(73) Patentinhaber: **Asea Brown Boveri Aktiengesellschaft**
**Kallstadter Strasse 1**
**W-6800 Mannheim-Käfertal(DE)**

(72) Erfinder: **Rohs, Ulrich, Dr.-Ing.**
**Roonstrasse 11**
**W-5160 Düren(DE)**
Erfinder: **Voigt, Dieter, Dr.-Ing.**
**Parkstrasse 70**
**W-5100 Aachen(DE)**

(74) Vertreter: **Rupprecht, Klaus, Dipl.-Ing. et al**
**c/o BBC Brown Boveri Aktiengesellschaft**
**ZPT Postfach 100351 Kallstadter Strasse 1**
**W-6800 Mannheim 1(DE)**

## Beschreibung

Die Erfindung betrifft eine Vorrichtung zur Erzeugung von definierten Drehschwingungen unter Einsatz eines Antriebs und einer Steuereinrichtung, deren Stellglied mit dem nichtumlaufenden drehbar gelagerten Getriebeglied eines mindestens dreiwelligen oder dreirädrigen mechanischen Summiergetriebes (Umlaufräder- oder Differentialgetriebe) in Antriebsverbindung steht.

Eine derartige Vorrichtung zur Erzeugung definierter Drehschwingungen ist aus der US-A-3 112 643 bekannt. Dort wird eine Testeinrichtung beschrieben, mit der momentane Drehzahländerungen und folglich momentane Momentenänderungen erzeugt werden können, wobei ein Umlaufrädergetriebe eingesetzt wird. Zur Drehmomentänderung wird ein drehbar gelagertes nichtumlaufendes Getriebeglied über einen Spindelantrieb und ein Stellglied mittels einer Drucklufteinrichtung verstellt.

Kolbenbrennkraftmaschinen erzeugen notwendigerweise aufgrund der Erregung durch periodisch verlaufende Gas- und Massenkräfte Drehschwingungen, die auf nachgeordnete, abtriebsseitige Baueinheiten übertragen bzw. überlagert werden.

Bei der Entwicklung und Prüfung von Baueinheiten, die in den Antriebsstrang von mit Kolbenbrennkraftmaschinen betriebenen Vorrichtungen, insbesondere Kraftfahrzeugen, eingebaut sind, z.B. Getriebe, Gelenkwellen, Achsantriebe und dgl., ist es notwendig, diese langzeitig der Einwirkung von Drehschwingungen auszusetzen, wie sie von Kolbenbrennkraftmaschinen erzeugt werden.

Die Verwendung von Kolbenbrennkraftmaschinen führt aber zu einem unerwünscht hohen irreversiblen Energieeinsatz und zugleich zu einer hohen Belastung der Umwelt durch Abgas- und Schallemissionen.

Wollte man zum Antrieb derartiger Baueinheiten umweltfreundliche Antriebe verwenden, so käme hierfür in erster Linie ein elektrischer Antrieb in Frage. Bei entsprechendem Prüfstandaufbau könnte die aufgewendete Energie dann teilweise wieder in einem Generator rückgewonnen werden. Allerdings erzeugen Elektromaschinen keine verwertbaren Drehschwingungen. Es müßte daher eine Vorrichtung geschaffen werden, die den Antriebsstrang so beeinflußt, daß in den zu prüfenden Baueinheiten Drehschwingungen simuliert werden, die denen weitestgehend· entsprechen, die normalerweise von Kolbenbrennkraftmaschinen erzeugt werden.

Andererseits wäre es ebenso sinnvoll, eine Vorrichtung zur Erzeugung von Drehschwingungen zu schaffen, wie sie von Kolbenbrennkraftmaschinen erzeugt werden, und diese Vorrichtung in einem Antriebsstrang so anzuordnen, daß sie die von der Kolbenbrennkraftmaschine erzeugten Drehschwingungen kompensiert oder dämpft.

Eine Vorrichtung zur Erzeugung von definierten Drehschwingungen unter Einsatz eines Antriebs und einer Steuereinrichtung, die aus einer druckmittelbetätigten Servoeinrichtung und einer antriebsseitig mit dieser verbundenen elektrisch gesteuerten Einrichtung zur Erzeugung von den Drehschwingungen entsprechenden Druckmittelimpulsen besteht, ist aus der US-A-4 283 957 bekannt. Dort wird eine Trägheitsmasse in Schwingung versetzt, um dynamische Drehkräfte für ein drehendes Testobjekt, z.B. die Welle eines Generators oder eine Fahrzeugachse, zu erzeugen.

Aus der US-A-3 460 405, der DE-B-1 222 757 und der FR-A-2 558 532 sind Einrichtungen mit Umlaufrädergetriebe bekannt, bei denen passive Vorrichtungen zur Schwingungsdämpfung eingesetzt werden.

Aufgabe der vorliegenden Erfindung ist es daher, eine zur Nachbildung der von Kolbenbrennkraftmaschinen erzeugten Drehschwingungen geeignete Vorrichtung zu schaffen, mit der definierte Drehschwingungen in gewünschter, eindeutiger Form und gesteuerter Amplitude erzeugt werden.

Diese Aufgabe wird in Verbindung mit den Merkmalen des Oberbegriffes erfindungsgemäß dadurch gelöst, daß zur dynamischen Nachbildung der von Kolbenbrennkraftmaschinen erzeugten Drehschwingungen die Steuereinrichtung aus einer druckmittelbetätigten Servoeinrichtung besteht, die eine antriebsseitig verbundene ektrisch gesteuerte Einrichtung zur Erzeugung von den Drehschwingungen entsprechenden Druckmittelimpulsen aufweist.

Das Steuersignal kann so programmiert sein, daß es die von einer Kolbenbrennkraftmaschine erzeugten Drehschwingungen am Summiergetriebe bewirkt, so daß die erfindungsgemäße Vorrichtung für die oben genannten Prüf-oder Kompensationszwecke einsetzbar ist.

Nachstehend ist die Erfindung anhand der Zeichnung beispielsweise näher erläutert. Es zeigen:

Fig. 1    eine schematische Draufsicht auf eine Vorrichtung gemäß der Erfindung mit einem Umlaufrädergetriebe,

Fig. 2    eine Seitenansicht zu Figur 1,

Fig. 3    eine schematische Draufsicht auf eine Vorrichtung gemäß der Erfindung mit Differentialgetriebe,

Fig. 4    eine Seitenansicht zu Figur 3,

Fig. 5    eine schaubildliche Darstellung des Drehschwingungsverlaufs bei Kolben-·brennkraftmaschinen und Elektromaschinen,

Fig. 6    ein Blockschaltbild einer Versuchsanordnung zur Bestimmung des Drehschwingungsverhaltens von Baueinheiten bei einem Elektroantrieb und

Fig. 7    ein Blockschaltbild eines Antriebsstranges einer Kolbenbrennkraftmaschine mit einer erfindungsgemäßen Vorrichtung zur Kompensation der Drehschwingungen.

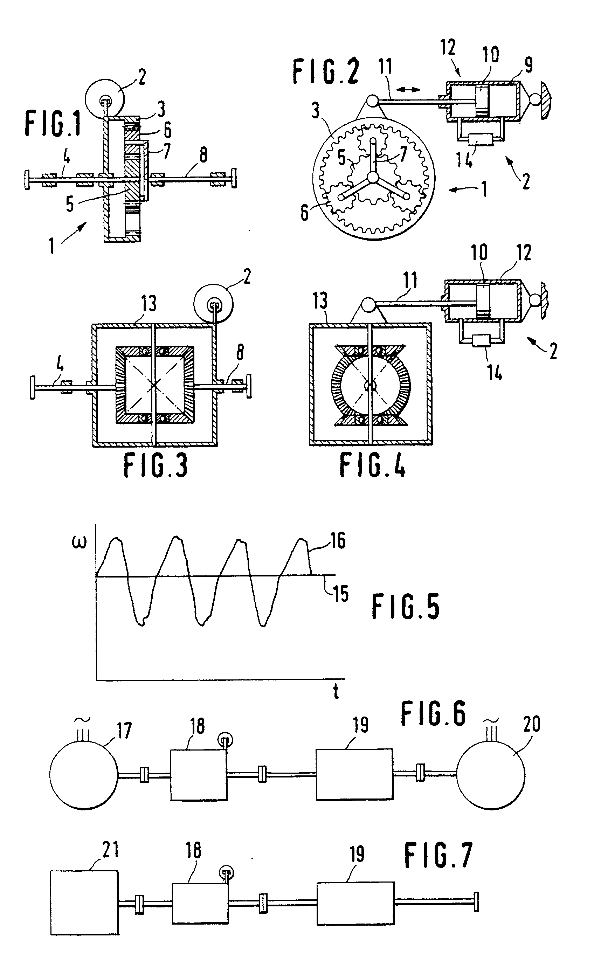

Die Fig. 1 und 2 zeigen eine erste Ausführungsform einer Vorrichtung zur Erzeugung definierter Drehschwingungen in einem mechanischen Getriebe.

Sie besteht aus einem mindestens dreiwelligen oder dreirädrigen Summiergetriebe 1 und einer mit diesem in Antriebsverbindung stehenden Steuereinrichtung 2. Das Summiergetriebe 1 ist im dargestellten Fall ein Umlaufrädergetriebe mit einem normalerweise ortsfesten, hier jedoch drehbar auf der Antriebswelle 4 gelagerten Kohlrad 3, einem mit der Antriebswelle 4 verbundenen und umlaufenden Sonnenrad 5 und mit auf einem Steg 7 gelagerten Planetenrädern 6. Der Steg 7 ist mit der Antriebswelle 8 starr verbunden und läuft mit dieser um.

Wie Fig. 2 erkennen läßt, besteht die Steuereinrichtung 2 aus einer druckmittelbetätigten Servoeinrichtung 12 mit einem Zylinder 9, in dem ein Kolben 10 geführt ist. Dieser Kolben 10 ist über eine Kolbenstange 11 gelenkig mit dem nichtumlaufenden Getriebeglied, d.h. hier dem drehbar gelagerten Hohlrad 3 des Summiergetriebes 1 verbunden.

Die Servoeinrichtung 12 weist eine Einrichtung 14 auf, und zwar sind die Zylinderräume der Servoeinrichtung 12 antriebsseitig mit der Einrichtung 14 verbunden, die durch ein elektrisches Signal gesteuert Druckmittelströme erzeugt, die mit den vorgesehenen definierten Drehschwingungen entsprechenden Impulsen auf das Stellglied 10 der Steuereinrichtung 2 einwirken.

Diese Impulse erzeugen im Summiergetriebe 2 Drehschwingungen bestimmter Art, z.B. solche, wie sie von einer Kolbenbrennkraftmaschine erzeugt werden.

Anstelle eines Schubkolbens 10 kann die Servoeinrichtung 12 auch einen Drehkolben als Stellglied aufweisen. (nicht dargestellt).

Die Fig.3 und 4 zeigen eine erfindungsgemäße Vorrichtung, bei der das Summiergetriebe anstelle eines Umlaufrädergetriebes ein Differentialgetriebe ist. Soweit es sich hierbei um mit dem vorgenannten Ausführungsbeispiel baugleiche Teile handelt, wurden die gleichen Bezugszeichen verwendet.

Das nichtumlaufende Gehäuse 13 bildet hier das Getriebeglied, das mit der Steuereinrichtung 2 verbunden ist und von dieser mit Drehschwingungsimpulsen beaufschlagt wird.

Fig.5 zeigt schaubildlich das Drehschwingungsverhalten am Abtrieb einer Kolbenbrennkraftmaschine und einer Elektromaschine. Letztere erzeugt keine Drehschwingungen, sondern läuft konstant um. Dies zeigt die zur Abszisse parallele Kurve 15. Die Kurve 16 zeigt dagegen die Charakteristik der Drehschwingungen einer Kolbenbrennkraftmaschine.

Fig.6 zeigt schematisch als Blockschaltbild eine Versuchsanordnung, die beispielsweise dazu dient, das Drehschwingungsverhalten von Baueinheiten zu studieren, obwohl diese von einer Elektromaschine 17 angetrieben werden. Dieser Antriebsstrang weist hinter der Elektromaschine 17 eine Vorrichtung 18 nach der Erfindung zur Erzeugung definierter Drehschwingungen auf, wobei hier Drehschwingungen erzeugt werden, wie sie sonst bei Verwendung einer Kolbenbrennkraftmaschine vorliegen würden. Abtriebsseitig an die Vorrichtung 18 sind die zu prüfenden Baueinheiten 19, z.B. Getriebe, Gelenkwelle, Achsantrieb oder dgl . angeschlossen. Diesen nachgeordnet ist ein Elektrogenerator 20 zur teilweisen Rückgewinnung der Antriebsenergie.

Diese Versuchsanordnung gestattet eine umweltfreundliche Form der Untersuchung bei weitgehend gleichförmigen Betriebsbedingungen.

Fig.7 zeigt ein Blockschaltbild eines Antriebsstranges mit einer Kolbenbrennkraftmaschine 21, wobei dieser eine erfindungsgemäße Vorrichtung 18 nachgeordnet ist, an die abtriebsseitig die üblichen Baueinheiten 19 angeschlossen sind.

Die Vorrichtung 18 ist dabei z.B. durch Phasenverschiebung oder Inversität so gesteuert, daß die von der Kolbenbrennkraftmaschine 21 kommenden Drehschwingungen weitestgehend kompensiert oder verändert werden.

## Patentansprüche

1.  Vorrichtung zur Erzeugung von definierten Drehschwingungen unter Einsatz eines Antriebs und einer Steuereinrichtung (2), deren Stellglied (10) mit dem nichtumlaufenden, drehbar gelagerten Getriebeglied (3,13) eines mindestens dreiwelligen oder dreirädigen mechanischen Summiergetriebes (1) (Umlaufräder- oder Differentialgetriebe) in Antriebsverbindung steht, dadurch gekennzeichnet, daß zur dynamischen Nachbildung der von Kolbenbrennkraftmaschinen erzeugten Drehschwingungen die Steuereinrichtung (2) aus einer druckmittelbetätigten Servoeinrichtung (12) besteht, die eine antriebsseitig verbundene elektrisch gesteuerte Einrichtung (14) zur Erzeugung von den Drehschwingungen entsprechenden Druckmittelimpulsen aufweist.

2.  Vorrichtung nach Anspruch 1, dadurch gekennzeichnet, daß das Stellglied als Drehkolben ausgebildet ist.

3. Vorrichtung nach Anspruch 1, dadurch gekennzeichnet, daß das Stellglied (10) als Schubkolben ausgebildet ist und am Getriebeglied (3,13) angelenkt ist.

4. Vorrichtung nach einem der Ansprüche 1 bis 3, dadurch gekennzchnet, daß sie zwischen einem Elektromotor (17) und den abtriebsseitigen Baueinheiten (19) eines Antriebsstranges angeordnet ist.

5. Vorrichtung nach einem der Ansprüche 1 bis 3, dadurch gekennzeichnet, daß sie zwischen einer Kolbenbrennnkraftmaschine (21) und den abtriebsseitigen Baueinheiten (19) eines Antriebsstranges angeordnet sind.

## Claims

1. Apparatus for producing defined torsional vibrations using a drive and a control device (2), the actuator (10) of which is in drive connection with the non-revolving, rotatably mounted mechanism element (3, 13) of an at least three-shaft or three-gear mechanical summator gear mechanism (1) (planetary gear mechanism or differential gear mechanism), characterised in that, for the purpose of the dynamic simulation of the torsional vibrations produced by reciprocating internal combustion engines, the control device (2) comprises a servo device (12) which is actuated by a pressure medium and has an electrically controlled device (14) connected on the input side for producing pressure-medium pulses corresponding to the torsional vibrations.

2. Apparatus according to Claim 1, characterised in that the actuator is designed as a rotary piston.

3. Apparatus according to Claim 1, characterised in that the actuator (10) is designed as a reciprocating piston and is connected in articulated fashion to the mechanism element (3, 13).

4. Apparatus according to one of Claims 1 to 3, characterised in that it is arranged between an electric motor (17) and the output-side constructional units (19) of a power train.

5. Apparatus according to one of Claims 1 to 3, characterised in that it is arranged between a reciprocating internal combustion engine (21) and the outputside constructional units (19) of a power train.

## Revendications

1. Dispositif pour la production de vibrations torsionnelles définies en utilisant un système d'entraînement et un dispositif de commande (2) dont l'organe de manoeuvre (10) est en liaison d'entraînement avec l'élément d'engrenage (3, 13) monté de façon mobile en rotation, mais qui n'est pas en rotation, d'un mécanisme d'intégration (1) mécanique (train planétaire ou différentiel) à au moins trois arbres ou trois roues dentées, caractérisé par le fait que pour la reproduction dynamique des vibrations torsionnelles produites par des machines à combustion interne à piston, le dispositif de commande (2) se compose d'un servomécanisme (12) qui est activé par un fluide sous pression et présente un dispositif (14) commandé par voie électrique, qui est relié côté entraînement et sert à produire des impulsions du fluide sous pression qui correspondent aux vibrations torsionnelles.

2. Dispositif selon la revendication 1, caractérisé par le fait que l'organe de manoeuvre est réalisé sous la forme d'un piston rotatif.

3. Dispositif selon la revendication 1, caractérisé par le fait que l'organe de manoeuvre (10) est réalisé sous la forme d'un piston alternatif et est articulé sur l'élément d'engrenage (3, 13).

4. Dispositif selon l'une des revendications 1 à 3, caractérisé par le fait qu'il est disposé entre un moteur électrique (17) et les composants (19), côté mené, d'une ligne d'entraînement.

5. Dispositif selon l'une des revendications 1 à 3, caractérisé par le fait qu'il est disposé entre une machine (21) à combustion interne à piston et les composants (19), côté mené, d'une ligne d'entraînement.

FIG.1

FIG.2

FIG.3

FIG.4

FIG.5

FIG.6

FIG.7